Europäisches Patentamt

European Patent Office

Office européen des brevets

(11) Numéro de publication: **0 477 850 A1**

## (12) DEMANDE DE BREVET EUROPEEN

(21) Numéro de dépôt: **91116224.6**

(22) Date de dépôt: **24.09.91**

(51) Int. Cl.5: **F02B 77/08**, G01M 15/00

(30) Priorité: **26.09.90 FR 9011860**

(43) Date de publication de la demande:
**01.04.92 Bulletin 92/14**

(84) Etats contractants désignés:
**AT BE CH DE DK FR GB IT LI NL SE**

(71) Demandeur: **S.E.M.T. Pielstick**
**2 quai de Seine**
**F-93200 Saint Denis(FR)**

(72) Inventeur: **Magnet, Jean-Louis**
**7, Allée des Vergers, Le Parc des Chênets**
**F-78100 St-Germain en Laye(FR)**

(74) Mandataire: **Weinmiller, Jürgen et al**
**Lennéstrasse 9 Postfach 24**
**W-8133 Feldafing(DE)**

(54) **Procédé de surveillance de l'émission d'oxydes d'azote pour un moteur à combustion interne.**

(57) L'invention concerne un procédé de surveillance de l'émission d'oxydes d'azote $NO_x$ contenus dans les gaz d'échappement d'un moteur à combustion interne. Le moteur à surveiller comporte un accéléromêtre agissant comme détecteur, les signaux fournis par l'accéléromêtre étant analysés pour déterminer la concentration en $NO_x$ dans les gaz d'échappement du moteur, ceci par comparaison avec les données fournies par un accéléromêtre équipant un moteur témoin.

EP 0 477 850 A1

La présente invention concerne un procédé de surveillance de l'émission d'oxydes d'azote contenus dans les gaz d'échappement d'un moteur à combustion interne.

Les moteurs à combustion interne constituent une source importante d'émissions de gaz polluants dans l'air ambiant. Ils rejettent en effet des résidus de combustion dont les oxydes d'azote NO et $NO_2$. Ces oxydes d'azote, englobés communément sous le terme $NO_x$, sont rejetés dans l'air ambiant en proportions variables suivant les conditions de fonctionnement.

La toxicité des oxydes d'azote rejetés par les moteurs thermiques est parfaitement établie, ce qui a conduit différents pays à établir des réglementations sur les émissions de gaz polluants.

Les oxydes d'azote comprennent du monoxyde d'axote NO qui se forme principalement dans le moteur aux températures de combustion et du dioxyde d'azote $NO_2$ obtenu par transformation de l'oxyde NO au contact de l'oxygène, en particulier de celui contenu dans l'air ambiant.

Les concentrations de monoxyde d'azote, et par suite de dioxyde d'azote, sont fonction de différents paramètres tels que : la température des gaz de combustion, le temps disponible pour les réactions, la richesse du mélange combustible.

On pourra donc réduire l'émission d'oxydes d'azote $NO_x$ en intervenant sur les paramètres qui favorisent leur formation. Cependant, on sait que l'émission de $NO_x$ est généralement maximale lorsque les réglages du moteur sont optimaux du point de vue du rendement.

Les moteurs à combustion interne pouvant fonctionner dans des sites multiples et/ou sous des conditions différentes, par exemple lorsqu'ils équipent des engins de traction ferroviaire, il se pose le problème de pouvoir déterminer rapidement et in situ leurs émissions d'oxydes d'azote et régler les moteurs de façon à respecter les normes réglementaires tout en conservant les meilleurs rendements possibles.

Dans certains cas, il peut être également intéressant de conserver durablement des données concernant les concentrations en $NO_x$ pour pouvoir les exploiter par la suite.

Pour déterminer les concentrations en $NO_x$ d'un gaz d'échappement, il est connu d'utiliser un analyseur physico-chimique de gaz qui est un appareil compliqué, coûteux, lourd, fragile et encombrant. En outre, cet appareil se prête mal à l'informatisation des résultats des mesures.

Il faudrait donc pouvoir détecter la concentration en $NO_x$ à partir d'un appareil, simple, peu cher, rustique, qui peut être laissé en permanence sur le moteur, pouvant fonctionner en temps réel mais pouvant aussi fournir des données utilisables après un délai assez long (par exemple les données devraient pouvoir être enregistrées magnétiquement). Cette concentration en $NO_x$ et les variations de cette concentration devraient pouvoir être appréciées par rapport à un niveau de référence. Enfin une correction éventuellement devrait être possible dès que la concentration en $NO_x$ dépasse les normes permises ou si cette concentration est trop basse ce qui peut signifier que le rendement du moteur est trop mauvais.

La présente invention propose de remplir ces conditions en utilisant un accéléromètre comme détecteur et en analysant les signaux fournis par le détecteur pour évaluer la concentration en $NO_x$ dans les gaz d'échappement d'un moteur à combustion interne, ceci par comparaison avec les données fournies par un accéléromètre équipant un moteur témoin.

L'invention a donc pour objet un procédé de surveillance de l'émission d'oxydes d'azote $NO_x$ contenus dans les gaz d'échappement d'un moteur à combustion interne, caractérisé en ce que :

- on installe un accéléromètre sur l'un des composants limitant la chambre de combustion d'un moteur témoin analogue au moteur à surveiller,
- on installe un dispositif connu de mesure de l'émission d'oxydes d'azote contenus dans les gaz d'échappement du moteur témoin,
- on fait fonctionner le moteur témoin dans divers cas de charge et de vitesse pour couvrir le champ de fonctionnement du moteur témoin,
- on relève simultanément les données concernant le signal accélérométrique dont on calcule un paramètre caractéristique, la mesure de la quantité d'oxydes d'azote $NO_x$ contenue dans les gaz d'échappement du moteur témoin et les paramètres caractéristiques de fonctionnement du moteur soient au moins vitesse, charge et température de l'air admis dans les cylindres,
- on établit, à partir des données relevées, la corrélation existant entre la mesure de la quantité d'oxydes d'azote et le paramètre caractéristique du signal accélérométrique,
- on installe un accélérateur sur le moteur à surveiller dans les mêmes conditions que pour le moteur témoin,
- on relève simultanément les données concernant le signal accélérométrique dont on calcule le paramètre caractéristique et les paramètres caractéristiques du fonctionnement du moteur soient au moins vitesse, charge et température de l'air admis dans les cylindres, pour le moteur à surveiller en fonctionnement,
- on établit, à partir des données relevées à l'étape précédente et à partir de la corrélation établie pour le moteur témoin, une valeur équivalente d'émission d'oxydes d'azote pour le moteur à surveiller,

- on prend éventuellement les décisions d'actions appropriées pour respecter une valeur de consigne imposée à l'émission d'oxydes d'azote.

Il est décrit ci-après, à titre d'exemple non limitatif, une mise en oeuvre préférée du procédé selon l'invention.

Dans un moteur à combustion interne, tous les phénomènes dynamiques (mécaniques et thermiques) sont générateurs de vibrations. Ce fait a déjà été exploité dans les procédés de détection de cliquetis ou de cognement.

On a découvert, selon la présente invention, qu'il existe un lien entre le taux de vibrations émis par un moteur à combustion interne et la concentration en oxydes d'azote NO$_x$ contenus dans l'échappement du moteur. Si un accéléromètre est fixé sur le moteur, notamment sur l'un des composants limitant sa chambre de combustion, on peut donc établir une relation entre l'un des paramètres caractéristiques du signal délivré par l'accéléromètre, par exemple le niveau de puissance spectrale, et la concentration en NO$_x$.

Cette constatation a été corroborée par des essais effectués sur plusieurs moteurs à combustion interne.

Avec des relevés effectués sur un moteur témoin, on pourra donc par comparaison effectuer une surveillance des moteurs de même type. Cette méthode présente l'avantage de pouvoir effectuer les relevés sur un moteur témoin disposé en atelier, ce qui facilite l'installation d'un analyseur physico-chimique de NO$_x$, et le prélèvement dans les gaz d'échappement.

Le procédé selon l'invention se déroule de la façon suivante.

On installe un accéléromètre sur l'un des composants limitant la chambre de combustion du moteur témoin. L'emplacement choisi pour l'accéléromètre doit permettre à celui-ci de détecter correctement les vibrations transmises par la chambre de combustion. Parallèlement, on installe un dispositif connu de mesure de l'émission d'oxydes d'azote à l'échappement du moteur témoin.

On fait fonctionner le moteur témoin dans divers cas de charge et de vitesse pour couvrir son champ de fonctionnement. On relève simultanément plusieurs sortes de données : celles concernant le signal accélérométrique fourni par l'accéléromètre, celles concernant la mesure de la quantité d'oxydes d'azote NO$_x$ contenue dans le gaz d'échappement et les paramètres caractéristiques de fonctionnement du moteur soient au moins vitesse, charge et température d'air admis dans les cylindres.

L'enregistrement du signal accélérométrique, en amplitude et en fréquence, est fait dans une gamme de fréquence allant de 0 à 50 000 Hz. On calcule à partir des données relevées par exemple la puissance spectrale du signal accélérométrique ou un élément représentatif de cette puissance.

Pratiquement, on ne s'intéresse pas à tout le signal fourni par l'accéléromètre mais à la fraction du signal correspondant à une période précise du cycle moteur et qui fournit en fait les informations intéressantes pour connaître la concentration en NO$_x$. Les informations intéressantes sont contenues dans une "fenêtre" temporelle qui inclut le début de la phase de combustion et que l'on ferme au voisinage de la fin de la combustion.

La puissance spectrale du signal accélérométrique recueilli correspond à un certain taux d'oxydes d'azote et ce taux a été mesuré par le dispositif connu de mesure physico-chimique. On peut alors établir une corrélation entre par exemple la puissance spectrale et la concentration en oxydes d'azote.

Pour surveiller un moteur du même type que le moteur témoin, il suffira donc d'installer sur le moteur à surveiller un accéléromètre dans les mêmes conditions que pour le moteur témoin.

En cours de fonctionnement, on relève les données concernant le signal accélérométrique dont on calcule par exemple la puissance spectrale ou un élément représentatif de cette puissance. On relève également les paramètres vitesse, charge et température d'air admis dans les cylindres, caractéristiques du fonctionnement du moteur. A partir de ces données et de la corrélation établie pour le moteur témoin, on peut établir une valeur équivalente d'émission d'oxydes d'azote pour le moteur à surveiller.

Cette valeur équivalente d'émission d'oxydes d'azote amènera un utilisateur à prendre éventuellement une décision en fonction de la concentration réglementaire à respecter. Les actions appropriées permettant de modifier la concentration en NO$_x$ sont diverses. On peut jouer sur l'avance à l'allumage ou à l'injection de carburant, sur la température d'air comburant, sur la régulation de puissance, sur la nature du combustible (par exemple par injection d'eau), sur la recirculation des gaz d'échappement ou sur l'excès d'air de combustion..

Le procédé selon l'invention présente l'avantage qu'à partir d'un seul moteur témoin on peut surveiller l'émission d'oxydes d'azote d'une manière continue si nécessaire et sous forme de signaux se prêtant particulièrement bien au stockage d'information et à l'intégration en tant que paramètre dans une boucle d'asservissement des conditions de fonctionnement.

Il entre dans le cadre de la présente invention d'obtenir le paramètre caractéristique du signal accélérométrique d'une autre manière que par le calcul de la puissance spectrale. On peut citer par exemple : le calcul de la valeur de l'amplitude crête du signal, le calcul de la valeur moyenne ou efficace du signal ou de son enveloppe, le calcul de l'énergie du signal accélérométrique.

**Revendications**

1. Procédé de surveillance de l'émission d'oxydes d'azote $NO_x$ contenus dans les gaz d'échappement d'un moteur à combustion interne, caractérisé en ce que :
   - on installe un accéléromètre sur l'un des composants limitant la chambre de combustion d'un moteur témoin analogue au moteur à surveiller,
   - on installe un dispositif connu de mesure de l'émission d'oxydes d'azote contenus dans les gaz d'échappement du moteur témoin,
   - on fait fonctionner le moteur témoin dans divers cas de charge et de vitesse pour couvrir le champ de fonctionnement du moteur témoin,
   - on relève simultanément les données concernant le signal accélérométrique dont on calcule un paramètre caractéristique, la mesure de la quantité d'oxydes d'azote $NO_x$ contenue dans les gaz d'échappement du moteur témoin et les paramètres caractéristiques de fonctionnement du moteur soient au moins vitesse, charge et température de l'air admis dans les cylindres,
   - on établit, à partir des données relevées, la corrélation existant entre la mesure de la quantité d'oxydes d'azote et le paramètre caractéristique du signal accélérométrique,
   - on installe un accéléromètre sur le moteur à surveiller dans les mêmes conditions que pour le moteur témoin,
   - on relève simultanément les données concernant le signal accélérométrique dont on calcule le paramètre caractéristique et les paramètres caractéristiques du fonctionnement du moteur soient au moins vitesse, charge et température de l'air admis dans les cylindres, pour le moteur à surveiller en fonctionnement,
   - on établit, à partir des données relevées à l'étape précédente et à partir de la corrélation établie pour le moteur témoin, une valeur équivalente d'émission d'oxydes d'azote pour le moteur à surveiller,
   - on prend éventuellement les décisions d'actions appropriées pour respecter une valeur de consigne imposée à l'émission d'oxydes d'azote.

2. Procédé selon la revendication 1, caractérisé en ce que le paramètre caractéristique du signal accélérométrique est calculé pour un signal contenu dans une fenêtre temporelle délimitée par la période de combustion et pour une plage de fréquence s'étendant de 0 à 50 000 Hz.

3. Procédé selon l'une des revendications 1 ou 2, caractérisé en ce que le paramètre caractéristique est obtenu par le calcul de la puissance spectrale du signal accélérométrique ou d'une valeur représentative de cette puissance.

4. Procédé selon l'une des revendications 1 ou 2, caractérisé en ce que le paramètre caractéristique est obtenu par le calcul de la valeur de l'amplitude crête du signal.

5. Procédé selon l'une des revendications 1 ou 2, caractérisé en ce que le paramètre caractéristique est obtenu par le calcul de la valeur moyenne ou efficace du signal ou de son enveloppe.

6. Procédé selon l'une des revendications 1 ou 2, caractérisé en ce que le paramètre caractéristique est obtenu par le calcul de l'énergie du signal accélérométrique.

7. Procédé selon l'une quelconque des revendications 1 à 6, caractérisé en ce que les actions appropriées pour respecter la valeur de consigne peuvent être une modification de l'avance à l'allumage où à l'injection de carburant, une modification de la température d'air comburant ou de la régulation de puissance.

8. Procédé selon l'une quelconque des revendications 1 à 6, caractérisé en ce que les actions appropriées pour respecter la valeur de consigne peuvent être une modification de la nature du combustible.

9. Procédé selon la revendication 8, caractérisé en ce que la modification de la nature du combustible peut être obtenue par injection d'eau.

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| A | US-A-4 271 811   (SUZUKI)<br>* colonne 2, ligne 50 - colonne 2, ligne 56 * * * colonne 3, ligne 23 - colonne 7, ligne 5; figure 3 * * <br>– – – | 1 | F 02 B 77/08<br>G 01 M 15/00 |
| A | EP-A-0 241 781   (S.E.M.T)<br>* le document en entier * *<br>– – – | 1-6 | |
| A | REVUE AUTOMOBILE vol. 85, no. 15, 5 Avril 1990, BERNE-CH page 17; 'du capteur de vibrations au diagramme de pression de combustion'<br>– – – – – | 1 | |

**DOMAINES TECHNIQUES RECHERCHES (Int. Cl.5)**

F 02 B
G 01 M
F 23 N

**Le présent rapport de recherche a été établi pour toutes les revendications**

| Lieu de la recherche | Date d'achèvement de la recherche | Examinateur |
|---|---|---|
| La Haye | 31 octobre 91 | MOUTON J.M.M.P. |